# EUROPÄISCHE PATENTSCHRIFT

(11) **EP 3 727 929 B1**
(45) Veröffentlichungstag und Bekanntmachung des Hinweises auf die Patenterteilung: **14.04.2021**
(21) Anmeldenummer: 18825586.3
(22) Anmeldetag: 10.12.2018
(51) Int. Cl.: B60N 2/02, B60N 2/16, B60N 2/42, B60N 2/427

(54) **CRASHSPERRENEINHEIT, INSBESONDERE FÜR EINEN FAHRZEUGSITZ, SOWIE FAHRZEUGSITZ**
CRASH-ARRESTING UNIT, IN PARTICULAR FOR A VEHICLE SEAT, AND VEHICLE SEAT
UNITÉ DE BLOCAGE EN CAS DE COLLISIONS, EN PARTICULIER POUR UN SIÈGE DE VÉHICULE, ET SIÈGE DE VÉHICULE

(30) Priorität: 21.12.2017 DE 102017223611; 04.05.2018 DE 102018110683
(43) Veröffentlichungstag der Anmeldung: 28.10.2020
(73) Patentinhaber: Adient Engineering and IP GmbH, 51399 Burscheid (DE)
(72) Erfinder: SCHUELER, Rolf, 42579 Heiligenhaus (DE)
(74) Vertreter: Liedhegener, Ralf
(86) Internationale Anmeldenummer: PCT/EP2018/084090
(87) Internationale Veröffentlichungsnummer: WO 2019/121082

(56) Entgegenhaltungen:
- WO-A1-2004/074037
- WO-A1-2017/001206

## Beschreibung

Die Erfindung betrifft eine Crashsperreneinheit, insbesondere für einen Fahrzeugsitz, aufweisend ein Verriegelungselement und eine Betätigungseinheit, wobei mittels der Betätigungseinheit das Verriegelungselement formschlüssig mit einem Gegenelement in Eingriff bringbar ist. Die Erfindung betrifft zudem einen Fahrzeugsitz, insbesondere Kraftfahrzeugsitz, mit wenigstens einem Mehrgelenk und einer Crashsperreneinheit, die im Crashfall wenigstens zwei Getriebeglieder des Mehrgelenks miteinander verriegelt.

### Stand der Technik

Aus dem Stand der Technik sind höheneinstellbare Fahrzeugsitze bekannt, bei denen ein Gurtschloss mitfahrend ist, das heißt an der Bewegung des Höheneinstellers teilnimmt, um beispielsweise bei einem aufgrund einer ruckartigen Bewegung gesperrten Gurtaufroller und nachfolgender elektrischer Verstellung der Sitzhöhe nach oben, eine unkomfortabel hohe Kraft zwischen Gurt und Insasse zu vermeiden. Da das Gurtschloss des Fahrzeugsitzes in aller Regel auf der Fahrzeuginnenseite (Tunnelseite) angeordnet ist, der für eine elektrische Verstellung erforderliche Getriebemotor aus Bauraumgründen auf der Tunnelseite üblicherweise aber nicht platziert werden kann, wird die vom Gurtschloss in den Höheneinsteller eingeleitete Kraft über die Gesamtsteifigkeit eines Unterbaus des Fahrzeugsitzes von der Tunnelseite auf die Fahrzeugaußenseite (Schwellerseite) übertragen und dort von einem selbsthemmend ausgelegten Getriebemotor aufgenommen. Aufgrund dieser räumlichen Gegebenheiten und der nur endlich hohen Steifigkeiten der im Kraftfluss befindlichen Bauteile des Fahrzeugsitzes, ergibt sich bei einer Lasteinleitung über den Gurt in das Gurtschloss ein nennenswerter Weg des Gurtschlosses in Lastrichtung, der unter Umständen eine unerwünscht hohe Bewegung des Insassen relativ zum restlichen Fahrzeuginnenraum zur Folge hat. Zur Lösung dieses Problems sind aus dem Stand der Technik sogenannte Crashsperreneinheiten bekannt, die auf der Tunnelseite des Sitzes, also in unmittelbarer Nähe des Gurtschlosses, verbaut werden, und bei Belastung des Gurtschlosses eine zusätzliche steife Verbindung innerhalb einer Höheneinstellerkinematik bereitstellen. Diese Crashsperreneinheiten sperren in aller Regel die Drehbewegung zwischen einer Sitzschiene und einer an der Sitzschiene angelenkten hinteren Schwinge der Höheneinstellerkinematik.

Eine entsprechende Crashsperreneinheit ist aus der WO 2004/074037 A1 bekannt. Eine unter einer Crashbelastung kinematisch erzwungene Einsteuerbewegung einer an einer hinteren Schwinge angelenkten Klinke in die Verzahnung eines mit der Sitzschiene verbundenen Zahnsegmentes bewirkt lastabhängig eine Sperrung der Drehbewegung zwischen der hinteren Schwinge und der Sitzschiene. Obwohl die Crashsperreinheiten gemäß WO 2004/074037 A1 einen bei Belastung des Gurtschlosses mit einer hohen Kraft auftretenden Weg deutlich reduziert, kann im Falle besonders weicher Sitzunterbauten eine für eine Auslösung der Crashsperreneinheit erforderliche notwendige Verformung des Fahrzeugsitzes recht hoch sein, zumal die im normalen Fahrbetrieb auftretenden Belastungen zu elastischen Deformationen führen können, die jedoch die Crashsperreinheit noch nicht auslösen lassen sollen. Um eine Auslösung bei Gebrauchslasten zu unterbinden, muss die Auslöseschwelle der Crashsperreinheit entsprechend hoch gewählt werden, was aber ein späteres Einfallen im Crashfall und damit eine unerwünscht große Relativbewegung des Gurtschlosses zur Folge hat.

Aus der DE 100 56 082 B4 ist eine Lösung bekannt, bei der ein verzögerungsabhängig sperrendes System zusätzlich lastabhängig angesteuert werden kann. Ein Gurtanbindungspunkt ist beweglich gelagert und eine unter Belastung entstehende Relativbewegung zwischen dem Gurtanbindungspunkt und einem Sitzrahmen wird mittels eines Seils auf eine sitzschienenfeste Sperre übertragen.

Aus der WO 2017/001206 A1 ist Fahrzeugsitz bekannt, mit einem Mehrgelenk zur Einstellung der Sitzhöhe, welches durch fünf Getriebeglieder definiert ist, wobei das Mehrgelenk im Normalbetrieb des Fahrzeugsitzes aufgrund einer zwischen zwei Getriebegliedern wirksamen Verriegelungseinheit als Viergelenk wirksam ist, und einer Crashsperreneinheit, die im Crashfall ein fahrzeugstrukturfestes Gestell und eine Schwinge als zwei der fünf Getriebeglieder derart miteinander verriegelt, dass das Mehrgelenk als Dreigelenk wirkt, wobei zwischen dem Gestell und der Schwinge ein weiteres Getriebeglied der fünf Getriebeglieder angeordnet ist, und wobei das Mehrgelenk im Crashfall aufgrund eines lastgesteuerten Entriegelns der Verriegelungseinheit zunächst als Fünfgelenk wirken kann, wodurch ein Verriegeln der Crashsperreneinheit auslösbar ist. Die Crashsperreneinheit ist unabhängig von einem lastgesteuerten Entriegeln der Verriegelungseinheit durch eine massenträgheitsgesteuerte Klinke der Crashsperreneinheit verriegelbar.

Die DE 10 2005 004 684 A1 offenbart eine Kopfstütze eines Kraftfahrzeugsitzes mit einem Stützkörper, der sich normalerweise in einer Gebrauchsposition befindet und der bei einem Unfall die Gebrauchsposition verlässt und eine Unfallposition einnimmt, in der sich der Stützkörper in Fahrtrichtung vor der Gebrauchsposition befindet. Eine Feder belastet den Stützkörper in Richtung der Unfallposition elastisch vor. Eine auslösbare Sperrvorrichtung ist der Feder zugeordnet. Die Feder ist normalerweise mittels der Sperrvorrichtung blockiert. Bei einem Unfall des Kraftfahrzeugs gibt die auslösbare Sperrvorrichtung das elastische Mittel frei, das dann den Stützkörper aus der Gebrauchsposition in die Unfallposition bewegen kann. Die Sperrvorrichtung ist durch einen Crashsensor auslösbar. Als Sperrvorrichtung ist ein Schmelzdraht offenbart, der durch einen elektrischen Impuls zerstört wird, so dass die Feder den Stützkörper aus der Gebrauchsposition in die Unfallposition bewegen kann.

### Aufgabe

Der Erfindung liegt die Aufgabe zu Grunde, eine Crashsperreneinheit der eingangs genannten Art zu verbessern. Der Erfindung liegt insbesondere die Aufgabe zugrunde, einen Fahrzeugsitz mit einer schnell ansprechenden Crashsperreneinheit auszurüsten, insbesondere einen aus der

WO 2017/001206 A1 bekannten Fahrzeugsitz mit einer schnell ansprechenden Crashsperreneinheit auszurüsten.

### Lösung

Diese Aufgabe wird erfindungsgemäß gelöst durch eine Crashsperreneinheit, insbesondere für einen Fahrzeugsitz, aufweisend ein Verriegelungselement und eine Betätigungseinheit, wobei mittels der Betätigungseinheit das Verriegelungselement formschlüssig mit einem Gegenelement in Eingriff bringbar ist, wobei die Betätigungseinheit eine elektromechanische Betätigungseinheit mit einem Schmelzdraht ist, wobei eine Zerstörung des Schmelzdrahtes eine Bewegung des Verriegelungselements in Richtung des Gegenelements freigibt.

Dadurch, dass die Betätigungseinheit eine elektromechanische Betätigungseinheit mit einem Schmelzdraht ist, wobei eine Zerstörung des Schmelzdrahtes eine Bewegung des Verriegelungselements in Richtung des Gegenelements freigibt, ist eine Verriegelung der Crashsperreneinheit durch Bestromen der Betätigungseinheit jederzeit und unabhängig von während eines Crashs (Unfalls) auftretenden Beschleunigungen möglich. Der Schmelzdraht ist vorzugsweise durch einen Stromstoß zerstörbar.

Das Verriegelungselement ist vorzugsweise eine Klinke. Die Klinke kann einen Verzahnungsbereich mit einer Verzahnung aufweisen. Das Gegenelement ist vorzugsweise ein Zahnsegment. Das Zahnsegment kann einen Zahnsegmentbereich mit einer Gegenverzahnung aufweisen, wobei die Gegenverzahnung mit der Verzahnung der Klinke in Zahneingriff bringbar ist. Eine Feder, insbesondere eine Druckfeder oder eine Schenkelfeder, kann in einem vorgespannten Zustand durch den Schmelzdraht in der vorgespannten Lage gehalten sein. Der Schmelzdraht und die Feder können Bestandteile der elektromechanischen Betätigungseinheit sein. Sobald der Schmelzdraht zerstört ist, kann die Feder eine Betätigungsstange betätigen, und die Betätigungsstange derart auf das Verriegelungselement einwirken, dass das Verriegelungselement mit dem Gegenelement in Eingriff kommt. Alternativ kann die Feder ein Betätigungsseil betätigen. Das Betätigungsseil kann derart auf das Verriegelungselement einwirken, dass das Verriegelungselement mit dem Gegenelement in Eingriff kommt, sobald der Schmelzdraht zerstört ist. Ein weiteres Ausführungsbeispiel sieht vor, dass die Feder unmittelbar das Verriegelungselement derart schwenkt, dass das Verriegelungselement mit dem Gegenelement in Eingriff kommt, sobald der Schmelzdraht zerstört ist.

Die Aufgabe wird zudem gelöst durch einen Fahrzeugsitz, insbesondere Kraftfahrzeugsitz, mit wenigstens einem Mehrgelenk zur Einstellung der Sitzhöhe, und einer erfindungsgemäßen Crashsperreneinheit, die im Crashfall wenigstens zwei Getriebeglieder des Mehrgelenks, insbesondere ein mit einer Fahrzeugstruktur verbindbares Gestell und eine Schwinge des Mehrgelenks, miteinander verriegelt.

Das Mehrgelenk des Fahrzeugsitzes kann durch wenigstens fünf Getriebeglieder definiert sein. Das Mehrgelenk kann im Normalbetrieb des Fahrzeugsitzes aufgrund einer zwischen wenigstens zwei Getriebegliedern der wenigstens fünf Getriebeglieder wirksamen Verriegelungseinheit als Viergelenk wirksam sein. Eine Crashsperreneinheit kann im Crashfall wenigstens ein mit der Fahrzeugstruktur verbindbares Gestell und eine Schwinge als zwei der wenigstens fünf Getriebeglieder derart miteinander verriegeln, dass das Mehrgelenk als Dreigelenk wirkt, wobei zwischen dem Gestell und der Schwinge ein weiteres Getriebeglied der wenigstens fünf Getriebeglieder angeordnet ist, und wobei das Mehrgelenk im Crashfall aufgrund eines lastgesteuerten Entriegelns der Verriegelungseinheit zunächst als Fünfgelenk wirken kann, wodurch ein Verriegeln der Crashsperreneinheit auslösbar ist. Die Crashsperreneinheit kann unabhängig von dem lastgesteuerten Entriegeln der Verriegelungseinheit mittels der erfindungsgemäßen elektromechanischen Betätigungseinheit verriegelbar sein.

Die Crashsperreneinheit kann unabhängig von dem lastgesteuerten Entriegeln der Verriegelungseinheit und unabhängig von der elektromechanischen Betätigungseinheit durch eine massenträgheitsgesteuerte Klinke verriegelbar sein.

Dadurch, dass die Crashsperreneinheit unabhängig von einem lastgesteuerten Entriegeln der Verriegelungseinheit durch eine massenträgheitsgesteuerte Klinke der Crashsperreneinheit verriegelbar ist, kann die Crashsperreneinheit auf drei unterschiedliche Weisen aktiviert werden, nämlich sowohl lastabhängig als auch massenträgheitsgesteuert als auch durch Bestromen der Betätigungseinheit der Crashsperreneinheit. Der aus der WO 2017/001206 A1 bekannte Fahrzeugsitz kann somit eine zusätzliche Verriegelung erhalten, die precrashfähig ist, das heißt bereits vor einem Crash betätigt werden kann.

Vorzugsweise kann das Mehrgelenk im Crashfall mittels einer massenträgheitsgesteuerten Klinke der Crashsperreneinheit zu einem starren Dreigelenk werden, ohne dass das Mehrgelenk zuvor ein Fünfgelenk wird. Dadurch kann die Crashsperreneinheit schon zu Beginn eines Frontcrashs, noch bevor die Gurtkräfte eine lastgesteuerte Verriegelung auslösen können, verriegeln.

Vorzugsweise weist das Mehrgelenk für eine lastgesteuerte Verriegelung der Crashsperreneinheit eine Steuerschwinge und eine Trägerschwinge auf, die im Normalfall mittels einer Verriegelungseinheit miteinander verriegelt sind, so dass das als Fünfgelenk ausgelegte Mehrgelenk kinematisch betrachtet als ein Viergelenk wirkt. Die Verriegelungseinheit hält die Steuerschwinge und eine Trägerschwinge im Frontcrash solange verriegelt, bis eine auf den Fahrzeugsitz wirkende Grenzkraft überschritten wird. Wird die Grenzkraft überschritten, öffnet die Verriegelungseinheit und das Mehrgelenk wirkt vorübergehend als Fünfgelenk. Die Steuerschwinge und die Trägerschwinge verdrehen sich dadurch relativ zueinander, bis die Klinke wirksam wird und das Mehrgelenk zu einem Dreigelenk verriegelt. Vorzugsweise ist die Schwinge, die durch die Verriegelungseinheit mit dem mit der Fahrzeugstruktur verbindbares Gestell unter Bildung eines Dreigelenks verriegelbar ist, die Trägerschwinge. Unter einer Trägerschwinge soll eine Schwinge verstanden werden, die ein weiteres Bauteil trägt, insbesondere eine Klinke trägt, die insbesondere zwischen zwei äußeren Gelenkpunkten der Schwinge angeordnet ist.

Vorzugsweise steuert die Klinke im Crashfall in ein Zahnsegment ein, wodurch das Dreigelenk entsteht. Das Zahnsegment kann an einem Gestell, beispielsweise einer Oberschiene eines als Längseinsteller dienenden Sitzschienenpaares befestigt sein. Die Klinke kann, insbesondere mittels eines Klinken-Lagerbolzens, schwenkbar an der Trägerschwinge gelagert sein. Die Klinke kann drehbar um eine Klinkendrehachse gelagert sein. Die Klinke kann drehbar um eine Klinkendrehachse an der Trägerschwinge gelagert sein.

Die Klinke kann zusätzlich massenträgheitsgesteuert sein, so dass die Klinke der Crashsperreneinheit auch aufgrund von Massenträgheitskräften mit dem Zahnsegment verriegeln kann, ohne dass sich dazu die Steuerschwinge und die Trägerschwinge relativ zueinander verdrehen müssen. Die zwischen Steuerschwinge und Trägerschwinge wirksame Verriegelungseinheit kann während des massenträgheitsgesteuerten Verriegelns der Klinke verriegelt bleiben.

Der Massenschwerpunkt der Klinke ist vorzugsweise exzentrisch zu einer Klinkendrehachse der Klinke angeordnet. Dazu kann die Klinke eine Zusatzmasse aufweisen, insbesondere im Vergleich zu aus dem Stand der Technik bekannten Klinken für Crashsperreneinheiten. Die Zusatzmasse kann an der Klinke befestigt sein. Die Zusatzmasse kann einteilig mit der Klinke ausgebildet sein.

Die Steuerschwinge weist vorzugsweise einen Zapfen auf, der eine Drehung der Klinke relativ zu der Trägerschwinge in Abhängigkeit eines Relativwinkels zwischen der Steuerschwinge und der Trägerschwinge steuern kann. Die Klinke weist dazu vorzugsweise eine Öffnung oder eine Vertiefung auf, insbesondere eine Steuernut, in die der Zapfen eingreift. Der Zapfen kann in wenigstens einer Drehrichtung der Klinke mit einem entkoppelnden Spiel in die Öffnung bzw. Vertiefung eingreifen. Der Zapfen kann bei entriegelter Verriegelungseinheit und einer Verdrehung der Trägerschwinge relativ zu der Steuerschwinge in wenigstens einer Drehrichtung einen Zahneingriff der Klinke mit dem Zahnsegment bewirken. In einer entgegengesetzten Drehrichtung der Klinke, die insbesondere zu einem Zahneingriff zwischen einem Verzahnungsbereich der Klinke und einem Zahnsegmentbereich des Zahnsegments führt, ist die Klinke vorzugsweise von dem Zapfen entkoppelt. Dadurch kann die Klinke massenträgheitsgesteuert verriegeln. Der Zapfen kann einteilig aus der Steuerschwinge ausgestellt sein. Der Zapfen kann an der Steuerschwinge befestigt, insbesondere vernietet sein. Der Steuerzapfen kann ein Bolzen sein. Der Steuerzapfen kann eine Buchse, insbesondere Kunststoffbuchse tragen, die zwischen dem Zapfen und der Klinke angeordnet ist und dadurch insbesondere eine Geräuschbildung vermeidet.

Die Klinke kann axial zwischen der Schwinge und einem Verstärkungsblech angeordnet sein. Das Verstärkungsblech kann fest mit der Trägerschwinge verbunden sein, beispielsweise mittels eines Distanzstücks oder Distanzrings. Dadurch lässt sich die Festigkeit der Crashsperreneinheit erhöhen.

Zusammenfassend ausgedrückt ist durch die Erfindung ein Crashgesperre (Crashsperreneinheit) zur Verriegelung von Höheneinstellern, Lehneneinstellern etc. zur Verfügung gestellt, das nicht nur aufgrund einer auftretenden Beschleunigung und/oder aufgrund eingeleiteter Lasten verriegeln kann, sondern auch mittels einer elektromechanischen Betätigungseinheit verriegeln kann. Die Erfindung löst damit die Aufgabe, den Verriegelungsprozess zeitlich zu optimieren, indem durch ein bereits vor der realen Beschleunigung vom Fahrzeug erzeugtes elektrisches Signal eine aktive Verriegelung der Crashsperreneinheit erfolgt.

Die Aufgabe wird gelöst, indem das Sperrelement von einer mechanischen Feder in Verriegelungsrichtung beschleunigt wird, diese Feder aber im vorgespannten Zustand durch einen Draht in der vorgespannten Lage gehalten wird, bis ein Stromstoß diesen Draht wie eine übliche Schmelzdrahtsicherung binnen kurzer Zeit zum Glühen und Durchschmelzen bringt. Unmittelbar nach dem Durchschmelzen des Drahtes ist somit die Feder nicht mehr blockiert und die gespeicherte Energie führt zu schlagartiger Verriegelung des Crashgesperres.

Basis für den erfindungsgemäßen Fahrzeugsitz ist der in der WO 2017/001206 A1 beschriebene Fahrzeugsitz, der erfindungsgemäß um eine zusätzliche, elektrische Aktivierungsmöglichkeit der Crashsperreneinheit erweitert wird. Zu diesem Zweck ist die Sperrklinke mit einer Feder beaufschlagt, die im Normalbetrieb von einem parallel angeordneten Metalldraht (Schmelzdraht) auf Vorspannung gehalten wird. Vorzugsweise besteht zwischen Klinke und Feder ein minimaler Abstand, so dass die Federkraft erst nach dem Durchschmelzen des Schmelzdrahtes die Klinke kontaktiert und somit verriegelnd beschleunigt. Die Auslegung der Feder geschieht vorzugsweise derart, dass auch im komplett verriegelten Zustand immer noch eine nennenswerte, verriegelnd wirkende Kraft ausgeübt wird, um bei ungünstigen Randbedingungen (Kopf auf Kopf-Stellung der Verzahnungen von Zahnsegment und Klinke oder dynamisches Zurückprellen der Sperrklinke) dennoch zuverlässig eine Verriegelung innerhalb kurzer Zeit bzw. nach geringer Relativbewegung zwischen Zahnsegment und Klinke sicherzustellen. Absolute geometrische Verriegelungssicherheit ist zu erreichen, indem eine weitere, um eine halbe Zahnteilung versetzte Klinke mit eigenem, zweiten Aktivator oder einem Aktivator mit zwei separaten Antriebsfedern, aber einem gemeinsamen Schmelzdraht, Verwendung findet, so dass immer mindestens eine der Klinken in hinreichende Überdeckung gebracht wird. Die reale Ausführung des "Schmelzdrahtaktivators" (Betätigungseinheit) kann als Zug- Druck- oder Schenkelfeder ausgeführt werden, entscheidend ist letztlich das Merkmal des direkt oder indirekt zwischen den Federenden wirkenden metallischen Drahtes, der die Feder im vorgespannten Zustand hält, solange der Draht nicht durchgeschmolzen ist. Derartige Aktuatoren mit Schmelzdraht sind in der Patentliteratur generell bekannt bzw. erwähnt, beispielsweise in der DE 10 2005 004 684 A1 zu crashaktiven Kopfstützen. Im Gegensatz zu crashaktiven Kopfstützen, die bereits bei sehr geringen Kollisionen reagieren und folglich reversibel sei sollen, erfolgt die Aktivierung einer sitzstrukturintegrierten Crashsperreneinheit erst beispielsweise zusammen mit oder kurz vor einer Airbagaktivierung, womit zwangsläufig ein erheblicher Reparaturaufwand am Fahrzeug und am Fahrzeugsitz entsteht und dieser gegebenenfalls ausgetauscht werden muss. Die bei Kopfstützen wegen der Reversierbarkeit eingesetzten, anderen Aktuatorausführungen (Elektromagnete, etc.) sind in Summe schwerer und/oder aufwendiger als die hier vorgeschlagene Kombination aus Feder und Draht, dennoch ist auch ein Schmelzdrahtaktuator in einer konstruktiven Ausführung darstellbar, die ggf. nach einem Crash durch einen neuen Aktivator ersetzt werden kann. Generell ist eine konstruktive Ausgestaltung als in einem Gehäuse geschützte Funktionseinheit zu bevorzugen, um Fehlauslösungen durch Beschädigung von außen und

Funktionsbeeinträchtigungen durch Verschmutzung zu vermeiden.

### Figuren und Ausführungsformen der Erfindung

Im Folgenden ist die Erfindung anhand dreier aus dem Stand der Technik bekannter Ausführungsbeispiele und dreier erfindungsgemäßer Ausführungsbeispiele näher erläutert. Die Erfindung ist jedoch nicht auf diese Ausführungsbeispiele beschränkt. Es zeigen:
- Fig. 1:: eine schematische Prinzipskizze eines ersten Ausführungsbeispiels eines aus dem Stand der Technik bekannten Fahrzeugsitzes mit einer Crashsperreneinheit,
- Fig. 2:: eine schematische Darstellung des ersten Ausführungsbeispiels des aus dem Stand der Technik bekannten Fahrzeugsitzes im Bereich einer Crashsperreneinheit, in einem nicht aktivierten Zustand der Crashsperreneinheit,
- Fig. 3:: eine Fig. 2 entsprechende Darstellung während der Verriegelung der Crashsperreneinheit,
- Fig. 4:: eine schematische Darstellung eines zweiten Ausführungsbeispiels eines aus dem Stand der Technik bekannten Fahrzeugsitzes im Bereich einer Crashsperreneinheit, in einem nicht aktivierten Zustand der Crashsperreneinheit,
- Fig. 5:: eine Fig. 4 entsprechende Darstellung, wobei die Crashsperreneinheit vollständig verriegelt ist,
- Fig. 6:: eine Fig. 4 entsprechende Darstellung während der Verriegelung der Crashsperreneinheit,
- Fig. 7:: ausschnittsweise eine perspektivische Explosionsdarstellung eines dritten Ausführungsbeispiels eines aus dem Stand der Technik bekannten Fahrzeugsitzes,
- Fig. 8:: eine schematische Darstellung eines Fahrzeugsitzes im Bereich einer erfindungsgemäßen Crashsperreneinheit gemäß eines ersten Ausführungsbeispiels, in einem nicht aktivierten Zustand der Crashsperreneinheit,
- Fig. 9:: eine Fig. 8 entsprechende Darstellung während der Verriegelung der Crashsperreneinheit,
- Fig. 10:: eine perspektivische und schematische Darstellung einer elektromechanischen Betätigungseinheit der Crashsperreneinheit aus Fig. 8,
- Fig. 11:: eine schematische Darstellung einer elektromechanischen Betätigungseinheit eines zweiten Ausführungsbeispiels einer erfindungsgemäßen Crashsperreneinheit,
- Fig. 12:: eine perspektivische und schematische Darstellung einer elektromechanischen Betätigungseinheit eines zweiten Ausführungsbeispiels einer erfindungsgemäßen Crashsperreneinheit, und
- Fig. 13:: einen Schnitt entlang der Linie XIII - XIII in Fig. 12.

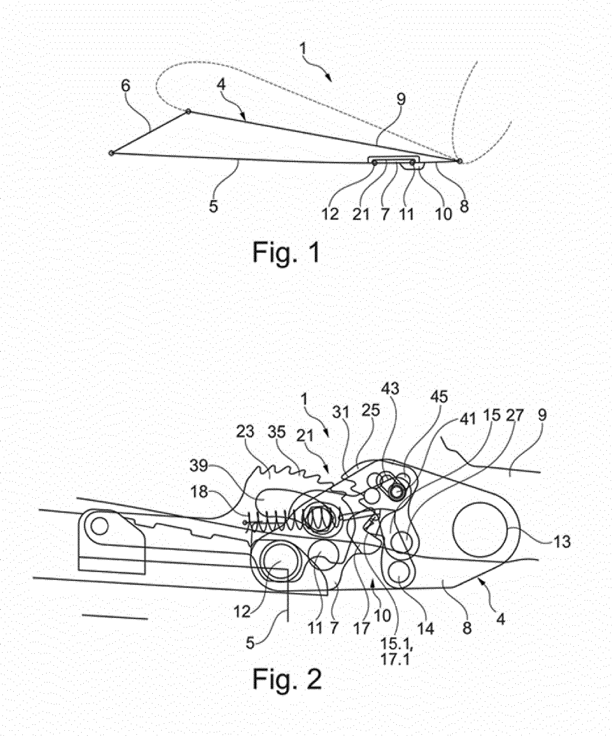

In den Figuren 1 bis 3 ist schematisch ein erstes Ausführungsbeispiel eines Fahrzeugsitzes 1 dargestellt, wie dieser aus dem Stand der Technik bekannt ist und weitgehend einem aus der WO 2004/074037 A1 bekannten Fahrzeugsitz entspricht.

Der Fahrzeugsitz 1 ist höheneinstellbar und für ein Kraftfahrzeug vorgesehen. Als Höheneinsteller dienen auf beiden Fahrzeugsitzseiten Mehrgelenke, wobei im Ausführungsbeispiel der Fahrzeugsitz 1 ein Vordersitz ist, der in Fahrtrichtung betrachtet beispielsweise auf der linken Fahrzeugseite eines linksgelenkten Kraftfahrzeugs als Fahrersitz einbaubar ist. Auf der linken Seite des Fahrzeugsitzes 1 (der Schwellerseite des Kraftfahrzeugs zugewandten Seite des Fahrzeugsitzes 1) ist ein motorisch bewegliches Viergelenk und auf der rechten Seite (Tunnelseite) ein im Normalfall, d.h. außerhalb des Crashfalls, als Viergelenk wirksames Mehrgelenk 4 vorgesehen ist, welches dem motorisch angetriebenen Viergelenk entsprechende Abmessungen aufweist. Auf der rechten Seite weist der Fahrzeugsitz 1 ein mitfahrendes Gurtschloss auf. Mitfahrend bedeutet vorliegend, dass bei einer Höhenverstellung des Fahrzeugsitzes 1 auch das Gurtschloss mittels des Höheneinstellers in der Höhe entsprechend verfahren wird, so dass im Crashfall Gurtkräfte über den Höheneinsteller geleitet werden müssen.

Das Mehrgelenk 4 besteht aus fünf Getriebegliedern, nämlich einem mit einer Fahrzeugstruktur verbindbaren Gestell 5, vorliegend einer Oberschiene eines als Längseinsteller dienenden Sitzschienenpaares, einer am Gestell 5 angelenkten vorderen Schwinge 6, einer hinten am Gestell 5 angelenkten Steuerschwinge 7, einer an der Steuerschwinge 7 angelenkten Trägerschwinge 8 und einer an der vorderen Schwinge 6 und der Trägerschwinge 8 angelenkten Koppel 9, vorliegend einem Sitzrahmenseitenteil, an dem vorzugsweise auch das Gurtschloss befestigt ist. Dabei ist im Normalfall die Steuerschwinge 7 durch eine nachstehend beschriebene Verriegelungseinheit 10 starr mit der Trägerschwinge 8 verbunden. Das Mehrgelenk 4 ist also ein Fünfgelenk, welches aber durch das Verriegeln zwischen Steuerschwinge 7 und Trägerschwinge 8 im Normalfall als Viergelenk wirkt. Die Trägerschwinge 8 ist mittels eines Verbindungsbolzens 11 an der Steuerschwinge 7 angelenkt, die Anlenkung der Steuerschwinge 7 am Gestell 5 erfolgt mittels eines Gelenkbolzens 12, und als Anlenkstelle zwischen der Trägerschwinge 8 und der Koppel 9 dient ein rundes Querrohr 13, welches zugleich einen Teil des Sitzrahmens bildet. Die Trägerschwinge 8 umschließt mit einem nicht näher dargestellten Langloch den Gelenkbolzen 12 mit Spiel.

Die Verriegelungseinheit 10 für die im Normalfall vorhandene starre Verbindung zwischen der Steuerschwinge 7 und der Trägerschwinge 8 weist an der Trägerschwinge 8 in einem Bereich hinter dem Verbindungsbolzen 11 einen mittels eines Riegel-Lagerbolzens 14 angelenkten Riegel 15 auf, der in ein Gegenstück 17 greift, welches starr mit der Steuerschwinge 7 verbunden ist. Dabei weist der Riegel 15 eine Funktionsfläche 15.1 auf, welche im Frontcrash relevant wird. Eine als Zugfeder ausgebildete Feder 18 ist zwischen dem Riegel 15 und einer vordem Verbindungsbolzen 11 vorgesehenen Abwinklung der Trägerschwinge 8 eingehängt. Die Feder 18 spannt den in das Gegenstück 17 greifenden Riegel 15 vor, wobei die Winkel zwischen der Funktionsfläche 15.1 und einer entsprechenden Anlagefläche 17.1 des Gegenstücks 17 außerhalb des Selbsthemmungsbereichs liegen. Dabei wird durch die Vorspannung der Feder 18 eine Grenzkraft definiert, bis zu welcher die Verriegelungseinheit 10 im Frontcrash kraftschlüssig hält, d.h. die Steuerschwinge 7 und die Trägerschwinge 8 miteinander starr verbunden sind.

Eine Crashsperreneinheit 21 des Fünfgelenks 4, welche im Frontcrash verriegelt, weist ein am Gestell 5 angebrachtes Zahnsegment 23 und eine Klinke 25 auf, welche mittels eines Klinken-Lagerbolzens 27 schwenkbar um eine Klinkendrehachse 26 an der Trägerschwinge 8 gelagert ist. Die zweiarmig ausgebildete, näherungsweise vertikal angeordnete Klinke 25 weist einen Verzahnungsbereich 31 auf.

Das um den Gelenkbolzen 12 gekrümmte Zahnsegment 23, welches in geringem Abstand zur Klinke 25 angeordnet ist, ist als Gegenelement zur Klinke 25 vorgesehen. Das Zahnsegment 23 weist ebenfalls einen Bereich von Zähnen auf, nämlich einen Zahnsegmentbereich 35, welcher zum Zusammenwirken mit dem Verzahnungsbereich 31 der Klinke 25 ausgebildet ist, d.h. mit entsprechend ausgebildeten Zähnen versehen ist.

Bei einer Schwenkbewegung der Steuerschwinge 7 und der mit ihr verriegelten Trägerschwinge 8 um den Gelenkbolzen 12, wie sie bei einer Höheneinstellung des Fahrzeugsitzes 1 auftritt, wandern der Verzahnungsbereich 31 der Klinke 25 an dem Zahnsegmentbereich 35 entlang. Um in jeder Einstellung des Fünfgelenks 4 ein Zusammenwirken gewährleisten zu können, ist der Zahnsegmentbereich 35 länger als der entsprechenden Verzahnungsbereich 31 ausgebildet. Für eine Verbesserung der Führung ragt der Verbindungsbolzen 11 durch eine Kulisse 39 des Zahnsegments 23, welche um den Gelenkbolzen 12 gekrümmt ist.

Zur Kopplung zwischen der Klinke 25 und der Steuerschwinge 7 steht an dem vom Gelenkbolzen 12 entfernt liegenden, oberen Ende der Steuerschwinge 7 parallel zum Gelenkbolzen 12 ein Zapfen 41 ab, welcher durch ein Langloch 43 in der Trägerschwinge 8 greift, und dessen anderes Ende in eine Steuernut 45 der Klinke 25 geführt ist. Das Langloch 43 ermöglicht eine für die beschriebene Funktionsfähigkeit der Klinke 45 notwendige Beweglichkeit des Zapfens 41.

Im Frontcrashfall wirkt aufgrund der auf das Gurtschloss wirkenden Kraft und des Sperrens des motorisch angetriebenen Viergelenks auf der anderen Fahrzeugsitzseite über das Querrohr 13 ein Drehmoment, welches versucht, das Mehrgelenk 4 aufzurichten. Dieses Drehmoment erzeugt ein Gegenmoment am Gelenkbolzen 12, welches versucht, die Steuerschwinge 7 relativ zur Trägerschwinge 8 zu verdrehen. Zunächst hält die Feder 18 noch den Riegel 15 im Gegenstück 17, wobei die Funktionsfläche 15.1 versucht, aus dem Gegenstück 17 zu gelangen. Sobald die Grenzkraft überschritten wird, kommt der Riegel 18 frei, so dass die Verriegelungseinheit 10 öffnet und die starre Verbindung zwischen der Steuerschwinge 7 und der Trägerschwinge 8 aufgehoben ist. Das Mehrgelenk 4 ist nun ein echtes Fünfgelenk, welches eine geringe Geometrieänderung aufgrund der Schwenkbewegung zwischen Trägerschwinge 8 und Steuerschwinge 7 erfährt.

Diese Schwenkbewegung bewirkt über die Kopplung mit dem Zapfen 41, dass die Klinke 25 geschwenkt wird, was zu einem zwangsgesteuerten Zahneingriff der Klinke 25 in das Zahnsegment 23 führt. Dadurch wird die Trägerschwinge 8 durch die Crashsperreneinheit 21 unter Überbrückung der Steuerschwinge 7 mit dem Gestell 5 verriegelt, das heißt, das zu einem starren Dreigelenk werdende Mehrgelenk 4 wird gesperrt, und das ganze System wird steifer. Die Crashlasten können so direkt in die Fahrzeugstruktur geleitet werden und bewirken somit nur eine geringe Deformation in der Sitzstruktur. Aufgrund der geringen Geometrieänderung wird ein im Bereich der Koppel 9 vorgesehener Gurtanbindungspunkt oder Gurtschlossanbindungspunkt nur geringfügig vorverlagert.

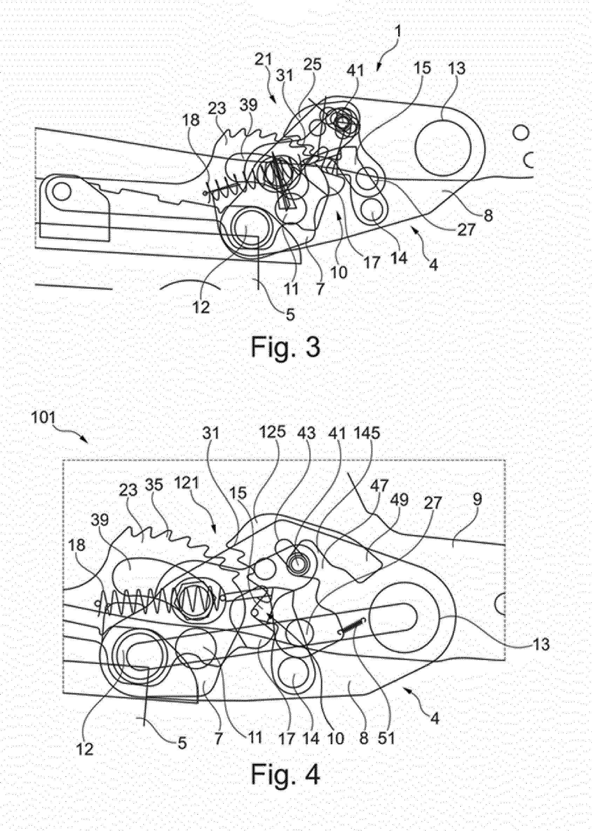

Die Figuren 4 bis 6 zeigen ausschnittsweise ein zweites Ausführungsbeispiel eines aus dem Stand der Technik bekannten Fahrzeugsitzes 101, der bis auf die nachfolgend abweichend beschriebenen Bauteile und Funktionen dem zuvor unter Bezugnahme auf die Figuren 1 bis 3 beschriebenen, aus dem Stand der Technik bekannten ersten Ausführungsbeispiel entspricht. Gleiche oder gleichwirkende Bauteile tragen daher dieselben Bezugszeichen.

Eine Crashsperreneinheit 121 des Fünfgelenks 4, welche im Frontcrash verriegelt, weist ein am Gestell 5 angebrachtes Zahnsegment 23 und eine Klinke 125 auf, welche mittels eines Klinken-Lagerbolzens 27 schwenkbar um eine Klinkendrehachse 26 an der Trägerschwinge 8 gelagert ist. Die Klinke 125 weist einen Verzahnungsbereich 31 auf.

Die gegenüber dem ersten Ausführungsbeispiel des Standes der Technik abweichend ausgebildete Klinke 125 weist eine Steuernut 145 auf, in die der Zapfen 41 eingreift. Die Steuernut 145 ist durch eine Öffnung 47 in einer von dem Verzahnungsbereich 31 abgewandten Richtung geöffnet. Dadurch ist die Klinke 125, im Gegensatz zum zuvor beschriebenen ersten Ausführungsbeispiel, begrenzt beweglich relativ zum Zapfen 41. Eine Druckfeder 51 spannt die Klinke 125 derart in eine Drehrichtung vor, dass der Verzahnungsbereich 31 der Klinke 125 von dem Zahnsegmentbereich 35 des Zahnsegments 23 wegdreht, bis eine dem Verzahnungsbereich 31 gegenüberliegende Begrenzungswand der Steuernut 145 an dem Zapfen 41 anliegt. Diese Situation entspricht dem Normalfall.

Während eines Frontcrashs schwenkt aufgrund von Massenträgheitskräften der Klinke 125 und unter Vorspannung der Druckfeder 51 die Klinke 125 in Richtung eines Zahneingriffs zwischen dem Verzahnungsbereich 31 der Klinke 125 und dem Zahnsegmentbereich 35 des Zahnsegments 23. Dabei löst sich der Zapfen 41 von der Begrenzungswand der Steuernut 145. Die Massenträgheitskräfte der Klinke 125 werden dabei durch einen exzentrisch zum Klinken-Lagerbolzen 27 angeordneten Schwerpunkt der Klinke 125 erzeugt. Zur Vergrößerung der Exzentrizität zwischen dem Klinken-Lagerbolzen 27 und dem Schwerpunkt der Klinke 125 weist die Klinke eine Zusatzmasse 49 auf, die bezogen auf den Klinken-Lagerbolzen 27 radial außen und von dem Verzahnungsbereich 31 abgewandt angeordnet ist. Die Zusatzmasse 49 ist vorliegend einteilig mit der Klinke 125 ausgeführt.

Figur 4 zeigt die Crashsperreneinheit 121 in einem Normalfall, in dem die Klinke 125 und das Zahnsegment 23 außer Zahneingriff sind. Es gibt zwei Möglichkeiten, wie die Klinke 125 während eines Frontcrashs in Zahneingriff mit dem Zahnsegment 23 geraten kann. Die erste Möglichkeit entspricht der zuvor unter Bezugnahme auf die Figuren 1 bis 3 ausführlich beschriebenen, aus dem Stand der Technik (erstes Ausführungsbeispiel) bekannten Verriegelung, die aufgrund einer im Frontcrashfall auf das Gurtschloss wirkenden Kraft erfolgt. Die zweite Möglichkeit ist die Verriegelung mittels der Massenträgheitskräfte der Klinke 125. Somit stehen zwei unterschiedliche technische Wirkprinzipien zur Verriegelung der Crashsperreneinheit 121 zur Verfügung. Während eines Frontcrashs können die Massenträgheitskräfte in der zeitlichen Abfolge die Klinke 125 bereits verriegeln, bevor die Kräfte auf das Gurtschloss ausreichend groß sind, um den Riegel 15 von dem Gegenstück 17 zu lösen und dadurch letztlich die Klinke 125 mittels des Zapfens 41 zu schwenken.

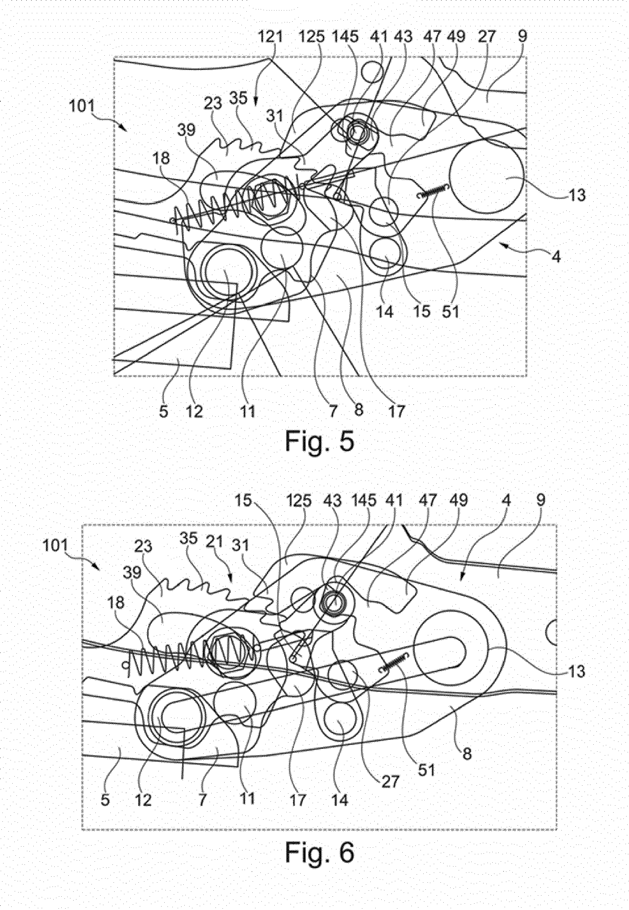

Figur 5 zeigt einen verriegelten Zustand der Crashsperreneinheit 121, in dem die Klinke 125 vollständig mit dem Zahnsegment 23 verriegelt hat. Je nach Art und Richtung des Frontcrashs kann der Bewegungsablauf während des Frontcrashs variieren: Der Verzahnungsbereich der Klinke 125 kann zeitlich zuerst aufgrund der Massenträgheitskräfte in den Zahnsegmentbereich 35 des Zahnsegments 23 einfallen und anschließend der Zapfen 41 nachrücken. Es ist jedoch auch möglich, dass beide Wirkprinzipien annähernd zeitgleich stattfinden.

Figur 6 zeigt einen weiteren möglichen Zustand während eines Frontcrashs. Der Verzahnungsbereich 31 der Klinke 125 ist relativ zu dem Zahnsegmentbereich 35 des Zahnsegments 23 in einer Stellung, in der die Zahnköpfe der Verzahnungen aufeinander stehen und dadurch ein Zahneingriff nur aufgrund der Massenträgheitskräfte nicht möglich ist. In diesem Fall wird der Zapfen 41, nach einer geringfügigen Deformation des Fahrzeugsitzes 101 aufgrund der Gurtkräfte und einer daraus resultierenden Relativbewegung zwischen Klinke 125 und Zahnsegment 23, die Klinke 125 in vollständigen Zahneingriff mit dem Zahnsegment 23 bringen.

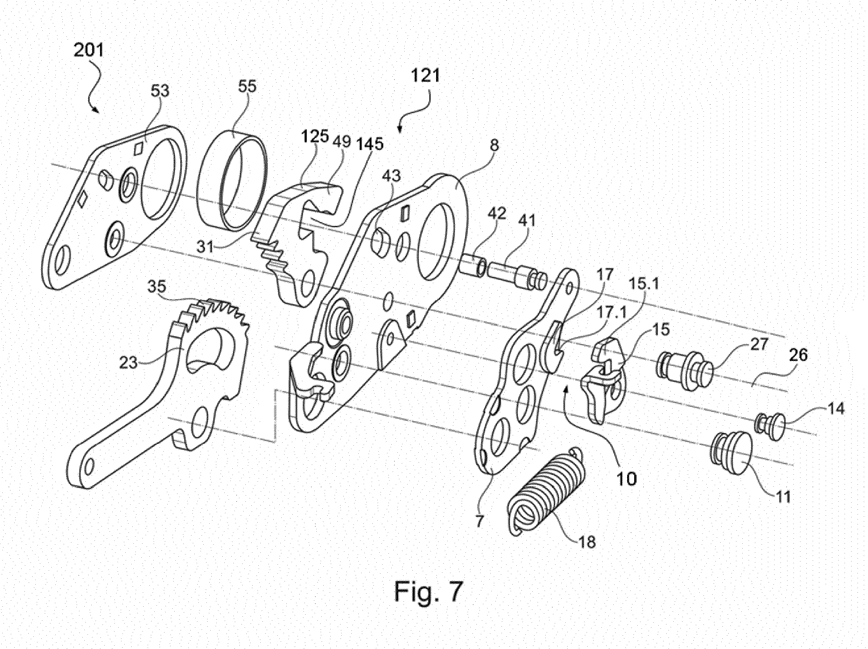

Die Figur 7 zeigt ein drittes Ausführungsbeispiel eines aus dem Stand der Technik bekannten Fahrzeugsitzes 201, der bis auf die nachfolgend abweichend beschriebenen Bauteile und Funktionen dem zuvor unter Bezugnahme auf die Figuren 4 bis 6 beschriebenen Fahrzeugsitz 101 des zweiten aus dem Stand der Technik bekannten Ausführungsbeispiels entspricht. Zur Erklärung der gleichwirkenden Bauteile und der gleichen Funktionen wird daher auf die Beschreibung des zweiten aus dem Stand der Technik bekannten Ausführungsbeispiels verwiesen. Gleiche oder gleichwirkende Bauteile tragen zudem dieselben Bezugszeichen wie in dem zweiten aus dem Stand der Technik bekannten Ausführungsbeispiel.

Eine Trägerschwinge 8 des Fahrzeugsitzes 201 ist mittels eines Verstärkungsblechs 53 verstärkt. Das Verstärkungsblech 53 ist parallel zu der Trägerschwinge 8 angeordnet. Das Verstärkungsblech 53 ist zu der Trägerschwinge 8 beabstandet angeordnet. Ein Distanzring 55 verbindet die Trägerschwinge 8 mit dem Verstärkungsblech 53. Der Distanzring 55 ist zylinderförmig. Eine Mittelachse des Distanzrings verläuft parallel zur Drehachse der Klinke 125. Die Trägerschwinge 8 liegt an einem ersten Ende des Distanzrings 55 an und ist mit diesem verschweißt. Das Verstärkungsblech 53 liegt an dem anderen Ende des Distanzrings 55 an und ist mit diesem verschweißt. Die Klinke 125 ist in axialer Richtung zwischen der Trägerschwinge 8 und dem Verstärkungsblech 53 angeordnet. Zudem ist das Zahnsegment 23 in axialer Richtung zwischen der Trägerschwinge 8 und dem Verstärkungsblech 53 angeordnet. Der Begriff axial bezieht sich auf die Klinkendrehachse 26.

Ein Zapfen 41 ist ein separat von der Steuerschwinge 7 ausgebildetes Bauteil. Der Zapfen 41 ist mit der Steuerschwinge 7 vernietet. Der Zapfen 41 trägt eine Buchse 42, die vorzugsweise aus einem Kunststoff besteht. Eine in Figur 7 nicht dargestellte Druckfeder spannt die Klinke 125 derart in eine Drehrichtung vor, dass ein Verzahnungsbereich 31 der Klinke 125 von einem Zahnsegmentbereich 35 eines Zahnsegments 23 wegdreht, bis eine dem Verzahnungsbereich 31 gegenüberliegende Begrenzungswand der Steuernut 145 der Klinke 125 an der Buchse 42 des Zapfens 41 anliegt. Diese Situation entspricht dem Normalfall. Bezüglich der Abläufe im Frontcrashfall stimmt das dritte Ausführungsbeispiel mit dem zweiten Ausführungsbeispiel überein. Insbesondere ist die Crashsperreneinheit 121 unabhängig von einem lastgesteuerten Entriegeln der Verriegelungseinheit 10 durch die massenträgheitsgesteuerte Klinke 125 verriegelbar.

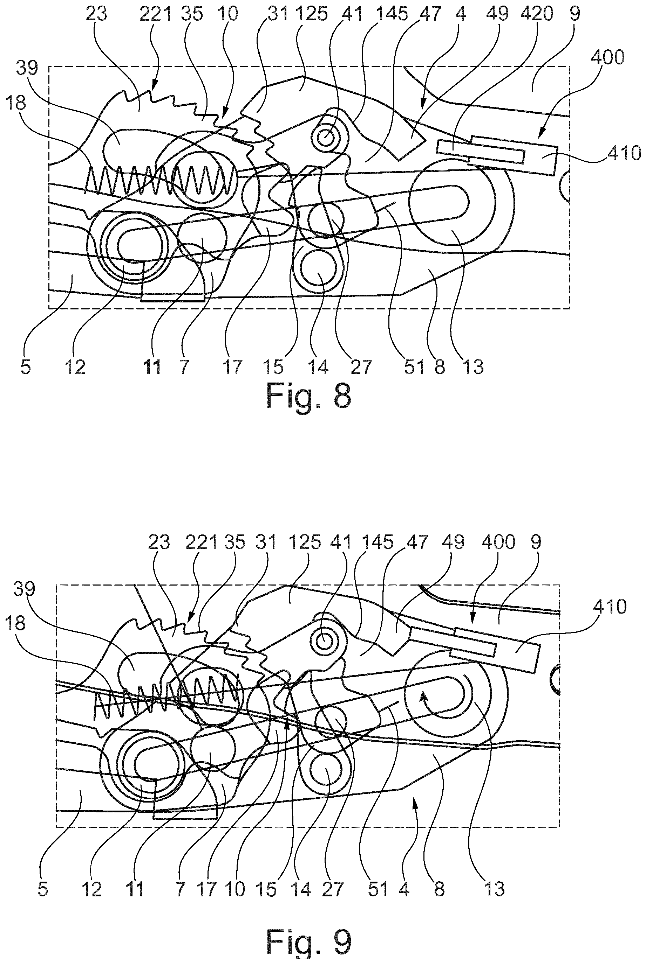

Die Figuren 8 bis 10 zeigen ausschnittsweise einen Fahrzeugsitz 301 mit einer erfindungsgemäßen Crashsperreneinheit 221 gemäß eines ersten Ausführungsbeispiels. Bis auf die nachfolgend abweichend beschriebenen Bauteile und Funktionen entspricht der Fahrzeugsitz 301 dem zuvor unter Bezugnahme auf die Figuren 4 bis 6 beschriebenen Fahrzeugsitz 101 des zweiten aus dem Stand der Technik bekannten Ausführungsbeispiels. Zur Erklärung der gleichwirkenden Bauteile und der gleichen Funktionen wird daher auf die Beschreibung des zweiten aus dem Stand der Technik bekannten Ausführungsbeispiels verwiesen. Gleiche oder gleichwirkende Bauteile tragen zudem dieselben Bezugszeichen wie im zweiten aus dem Stand der Technik bekannten Ausführungsbeispiel.

Eine Verriegelung der Crashsperreneinheit 221 im Crashfall kann, wie bei der zuvor beschriebenen Crashsperreneinheit 121 des zweiten aus dem Stand der Technik bekannten Ausführungsbeispiels, aufgrund eines lastgesteuerten Entriegelns einer Verriegelungseinheit 10 oder unabhängig von einem lastgesteuerten Entriegeln der Verriegelungseinheit 10 durch eine massenträgheitsgesteuerte Klinke 125 der Crashsperreneinheit 221 erfolgen. Zudem kann eine Verriegelung der Crashsperreneinheit 221 erfolgen, indem die Klinke 125 unmittelbar vor oder während eines Crashfalls mittels einer elektromechanischen Betätigungseinheit 400 mit einem am Gestell 5 befestigten Zahnsegment 23 in Zahneingriff bringbar ist.

Die elektromechanische Betätigungseinheit 400 weist ein Gehäuse 410, eine Betätigungsstange 420, eine Druckfeder 430 und einen Schmelzdraht 440 auf. Die Druckfeder 430 ist vorgespannt derart zwischen dem Gehäuse 410 und der Betätigungsstange 420 angeordnet, dass bei einer Entspannung der Druckfeder 430 die Druckfeder 430 die Betätigungsstange 420 relativ zu dem Gehäuse 410 bewegt und dadurch die Betätigungsstange 420 die Klinke 125 in Richtung des Zahnsegments 23 schwenkt. Die Druckfeder 430 ist im Normalgebrauch des Fahrzeugsitzes 301 vorgespannt und mittels des Schmelzdrahtes 440 gegen eine Entspannung gesichert.

Die Betätigungsstange 420 umfasst einen Kolbenabschnitt 422 und einen Stangenabschnitt 424. Der Kolbenabschnitt 422 und der Stangenabschnitt 424 sind einteilig ausgeführt oder fest miteinander verbunden. Der Kolbenabschnitt 422 ist in einem Zylinderabschnitt 412 des Gehäuses 410 beweglich geführt. Die Druckfeder 430 ist vollständig in dem Gehäuse 410 angeordnet. Ein erstes Federende der Druckfeder 430 stützt sich an einer Stirnfläche 414 des Gehäuses 410 ab. Ein zweites Federende der Druckfeder 430 stützt sich an dem Kolbenabschnitt 422 ab. Der Schmelzdraht 440 verbindet den Kolbenabschnitt 422 mit dem Gehäuse 410, vorliegend mit der Stirnfläche 412 des Gehäuses 410. Alternativ verbindet der Schmelzdraht 440 einzelne Windungen der Druckfeder 430 derart miteinander, dass sich die Druckfeder 430 nicht entspannen kann.

Der Schmelzdraht 440 kann im Crashfall über zwei Kabel 442 und eine elektrische Stromquelle 444 bestromt werden. Die Stromstärke und der Spannung können in an sich bekannter Weise in Abhängigkeit insbesondere des Drahtwerkstoffes, des Drahtdurchmessers und einer gewünschten Auslösezeit der elektromechanischen Betätigungseinheit 400 ausgelegt werden. Unter der Bestromung des Schmelzdrahtes 440 schmilzt der Schmelzdraht 440 und die Druckfeder 430 kann sich entspannen. Dadurch schwenkt die Betätigungsstange 420 die Klinke 125 in Richtung des Zahnsegments 23, bis die Klinke 125 vollständig mit dem Zahnsegment 23 verriegelt.

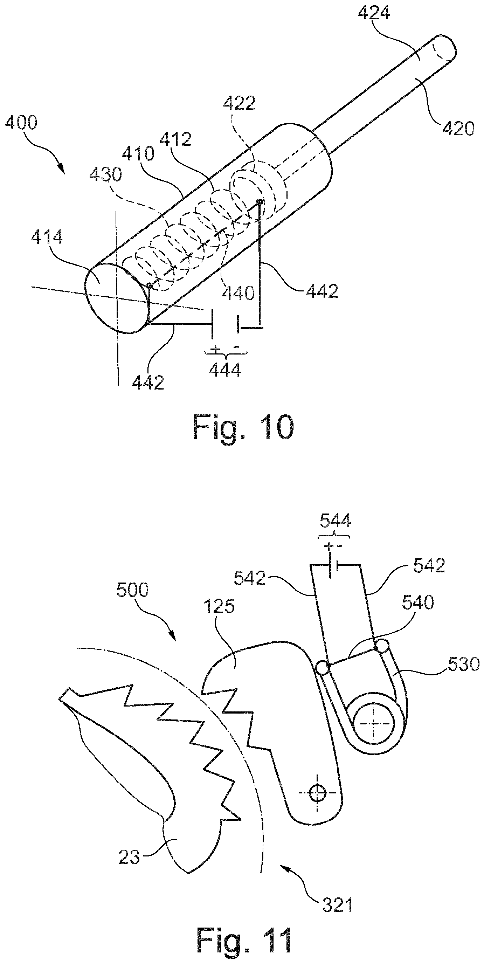

Figur 11 zeigt eine elektromechanische Betätigungseinheit 500 einer erfindungsgemäßen Crashsperreneinheit 321 gemäß eines zweiten Ausführungsbeispiels. Bis auf die nachfolgend abweichend beschriebenen Bauteile und Funktionen entspricht die Crashsperreneinheit 321 der zuvor unter Bezugnahme auf die Figuren 8 bis 11 beschriebenen Crashsperreneinheit 221 des ersten Ausführungsbeispiels. Zur Erklärung der gleichwirkenden Bauteile und der gleichen Funktionen wird daher auf die Beschreibung des zweiten aus dem Stand der Technik bekannten Ausführungsbeispiels und des ersten erfindungsgemäßen Ausführungsbeispiels verwiesen. Gleiche oder gleichwirkende Bauteile tragen zudem dieselben Bezugszeichen wie im zweiten aus dem Stand der Technik bekannten Ausführungsbeispiel.

Die elektromechanische Betätigungseinheit 500 weist eine Schenkelfeder 530 und einen Schmelzdraht 540 auf. Die Schenkelfeder 530 ist vorgespannt und mittels des Schmelzdrahtes 540 gegen eine Entspannung gesichert.

Der Schmelzdraht 540 kann im Crashfall über zwei Kabel 542 und eine elektrische Stromquelle 544 bestromt werden. Unter der Bestromung des Schmelzdrahtes 540 schmilzt der Schmelzdraht 540 und die Schenkelfeder 530 kann sich entspannen. Dadurch schwenkt die Schenkelfeder 530 die Klinke 125 in Richtung des Zahnsegments 23, bis die Klinke 125 vollständig mit dem Zahnsegment 23 verriegelt.

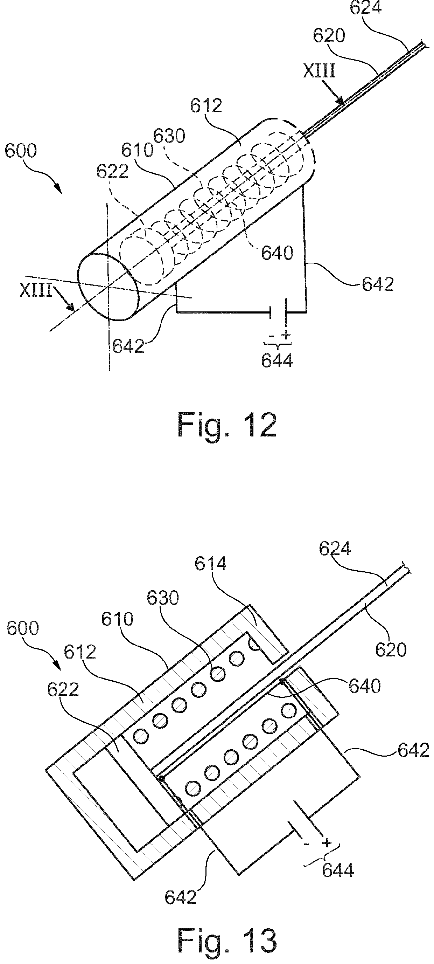

Die Figuren 12 und 13 zeigen eine elektromechanische Betätigungseinheit 600 einer erfindungsgemäßen Crashsperreneinheit gemäß eines dritten Ausführungsbeispiels. Bis auf die nachfolgend abweichend beschriebenen Bauteile und Funktionen entspricht die Crashsperreneinheit der zuvor unter Bezugnahme auf die Figuren 8 bis 11 beschriebenen ersten Crashsperreneinheit 221. Zur Erklärung der gleichwirkenden Bauteile und der gleichen Funktionen wird daher auf die Beschreibung des zweiten aus dem Stand der Technik bekannten Ausführungsbeispiels und des ersten erfindungsgemäßen Ausführungsbeispiels verwiesen. Gleiche oder gleichwirkende Bauteile tragen zudem dieselben Bezugszeichen wie im zweiten aus dem Stand der Technik bekannten Ausführungsbeispiel.

Eine Verriegelung der Crashsperreneinheit im Crashfall kann, wie bei der zuvor beschriebenen Crashsperreneinheit 121 des zweiten aus dem Stand der Technik bekannten Ausführungsbeispiels, aufgrund eines lastgesteuerten Entriegelns einer Verriegelungseinheit 10 oder unabhängig von einem lastgesteuerten Entriegeln der Verriegelungseinheit 10 durch eine massenträgheitsgesteuerte Klinke 125 der Crashsperreneinheit erfolgen. Zudem kann eine Verriegelung der Crashsperreneinheit erfolgen, indem die Klinke 125 unmittelbar vor oder während eines Crashfalls mittels einer elektromechanischen Betätigungseinheit 600 mit einem am Gestell 5 befestigten Zahnsegment 23 in Zahneingriff bringbar ist.

Die elektromechanische Betätigungseinheit 600 weist ein Gehäuse 610, ein Betätigungsseil 620, eine Druckfeder 630 und einen Schmelzdraht 640 auf. Die Druckfeder 630 ist vorgespannt derart zwischen dem Gehäuse 610 und dem Betätigungsseil 620 angeordnet, dass bei einer Entspannung der Druckfeder 630 die Druckfeder 630 das Betätigungsseil 620 relativ zu dem Gehäuse 610 bewegt, und dadurch das Betätigungsseil 620 die Klinke 125 in Richtung des Zahnsegments 23 zieht. Die Druckfeder 630 ist im Normalgebrauch des Fahrzeugsitzes vorgespannt und mittels des Schmelzdrahtes 640 gegen eine Entspannung gesichert.

Das Betätigungsseil 620 umfasst einen Kolbenabschnitt 622 und einen Seilabschnitt 624. Der Seilabschnitt 624 und der Kolbenabschnitt 622 sind miteinander verbunden. Der Kolbenabschnitt 622 ist in einem Zylinderabschnitt 612 des Gehäuses 610 beweglich geführt. Die Druckfeder 630 ist vollständig in dem Gehäuse 610 angeordnet. Ein erstes Federende der Druckfeder 630 stützt sich an einer Stirnfläche 614 des Gehäuses 610 ab. Ein zweites Federende der Druckfeder 630 stützt sich an dem Kolbenabschnitt 622 ab. Der Schmelzdraht 640 verbindet den Kolbenabschnitt 622 mit dem Gehäuse 610, vorliegend mit der Stirnfläche 612 des Gehäuses 610. Alternativ verbindet der Schmelzdraht 640 einzelne Windungen der Druckfeder 630 derart miteinander, dass sich die Druckfeder 630 nicht entspannen kann.

Der Schmelzdraht 640 kann im Crashfall über zwei Kabel 642 und eine elektrische Stromquelle 644 bestromt werden. Unter der Bestromung des Schmelzdrahtes 640 schmilzt der Schmelzdraht 640 und die Druckfeder 630 kann sich entspannen. Dadurch schwenkt die Betätigungsstange 620 die Klinke 125 in Richtung des Zahnsegments 23, bis die Klinke 125 vollständig mit dem Zahnsegment 23 verriegelt.

Die in der vorstehenden Beschreibung, den Ansprüchen und den Zeichnungen offenbarten Merkmale können sowohl einzeln als auch in Kombination für die Verwirklichung der Erfindung in ihren verschiedenen Ausgestaltungen von Bedeutung sein.

Obwohl die Erfindung in den Zeichnungen und der vorausgegangenen Darstellung im Detail beschrieben wurde, sind die Darstellungen illustrativ und beispielhaft und nicht einschränkend zu verstehen. Insbesondere ist die Wahl der zeichnerisch dargestellten Proportionen der einzelnen Elemente nicht als erforderlich oder beschränkend auszulegen. Weiterhin ist die Erfindung insbesondere nicht auf die erläuterten Ausführungsbeispiele beschränkt. Weitere Varianten der Erfindung und ihre Ausführung ergeben sich für den Fachmann aus der vorangegangenen Offenbarung, den Figuren in Zusammenhang mit den Ansprüchen.

### Bezugszeichenliste

- 1, 101, 201, 301: Fahrzeugsitz
- 4: Mehrgelenk
- 5: Gestell
- 6: vordere Schwinge
- 7: Steuerschwinge
- 8: Schwinge, Trägerschwinge
- 9: Koppel
- 10: Verriegelungseinheit
- 11: Verbindungsbolzen
- 12: Gelenkbolzen
- 13: Querrohr
- 14: Riegel-Lagerbolzen
- 15: Riegel
- 15.1: Funktionsfläche
- 17: Gegenstück
- 17.1: Anlagefläche
- 18: Feder
- 21, 121, 221, 321: Crashsperreneinheit
- 23: Zahnsegment, Gegenelement
- 25, 125: Klinke, Verriegelungselement
- 26: Klinkendrehachse
- 27: Klinken-Lagerbolzen
- 31: Verzahnungsbereich
- 33: Schwerpunkt
- 35: Zahnsegmentbereich
- 39: Kulisse
- 41: Zapfen
- 42: Buchse
- 43: Langloch
- 45, 145: Steuernut
- 47: Öffnung
- 49: Zusatzmasse
- 51: Druckfeder
- 53: Verstärkungsblech
- 55: Distanzring
- 400, 500, 600: Betätigungseinheit
- 410,610: Gehäuse
- 412,612: Zylinderabschnitt
- 414,614: Stirnfläche
- 420,620: Betätigungsstange
- 422,622: Kolbenabschnitt
- 424, 624: Stangenabschnitt
- 430, 530, 630: Feder, Druckfeder
- 440, 540, 640: Schmelzdraht
- 442, 542, 642: Kabel
- 444, 544, 644: Stromquelle

## Patentansprüche

1. Crashsperreneinheit (221, 321), insbesondere für einen Fahrzeugsitz, aufweisend ein Verriegelungselement (125) und eine Betätigungseinheit (400, 500, 600), wobei mittels der Betätigungseinheit (400, 500, 600) das Verriegelungselement (125) formschlüssig mit einem Gegenelement (23) in Eingriff bringbar ist, **dadurch gekennzeichnet, dass** die Betätigungseinheit (400, 500, 600) eine elektromechanische Betätigungseinheit (400, 500, 600) mit einem Schmelzdraht (440, 540, 640) ist, wobei eine Zerstörung des Schmelzdrahtes (440, 540, 640) eine Bewegung des Verriegelungselements (125) in Richtung des Gegenelements (23) freigibt.

2. Crashsperreneinheit (221, 321) nach Anspruch 1, **dadurch gekennzeichnet, dass** das Verriegelungselement eine Klinke (125) ist.

3. Crashsperreneinheit (221, 321) nach Anspruch 1 oder 2, **dadurch gekennzeichnet, dass** das Gegenelement ein Zahnsegment (23) ist.

4. Crashsperreneinheit (221, 321) nach einem der Ansprüche 1 bis 3, **dadurch gekennzeichnet, dass** der Schmelzdraht (440, 540, 640) durch einen Stromstoß zerstörbar ist.

5. Crashsperreneinheit (221, 321) nach einem der Ansprüche 1 bis 4, **dadurch gekennzeichnet, dass** eine Feder (430, 530, 630) in einem vorgespannten Zustand durch den Schmelzdraht (440, 540, 640) in der vorgespannten Lage gehalten ist.

6. Crashsperreneinheit (221, 321) nach Anspruch 5, **dadurch gekennzeichnet, dass** die Feder eine Druckfeder (430, 530, 630) ist.

7. Crashsperreneinheit (221, 321) nach Anspruch 6, **dadurch gekennzeichnet, dass** der Schmelzdraht (440, 540, 640) und die Feder (430, 530, 630) Bestandteile der elektromechanischen Betätigungseinheit (400, 500, 600) sind.

8. Crashsperreneinheit (221) nach einem der Ansprüche 5 bis 7, **dadurch gekennzeichnet, dass** die Feder (430) eine Betätigungsstange (420) betätigt, und die Betätigungsstange (420) derart auf das Verriegelungselement (125) einwirkt, dass das Verriegelungselement (125) mit dem Gegenelement (23) in Eingriff kommt, sobald der Schmelzdraht (440) zerstört ist.

9. Crashsperreneinheit (221) nach einem der Ansprüche 5 bis 7, **dadurch gekennzeichnet, dass** die Feder (630) ein Betätigungsseil (620) betätigt sobald der Schmelzdraht (640) zerstört ist, und dadurch das Betätigungsseil (620) derart auf das Verriegelungselement (125) einwirkt, dass das Verriegelungselement (125) mit dem Gegenelement (23) in Eingriff kommt.

10. Crashsperreneinheit (321) nach einem der Ansprüche 5 bis 7, **dadurch gekennzeichnet, dass** die Feder (530) unmittelbar das Verriegelungselement (125) derart schwenkt, dass das Verriegelungselement (125) mit dem Gegenelement (23) in Eingriff kommt, sobald der Schmelzdraht (540) zerstört ist.

11. Fahrzeugsitz, insbesondere Kraftfahrzeugsitz, mit wenigstens einem Mehrgelenk (4) und einer Crashsperreneinheit (221, 321) nach einem der Ansprüche 1 bis 10, die im Crashfall wenigstens zwei Getriebeglieder des Mehrgelenks (4) miteinander verriegelt.

12. Fahrzeugsitz nach Anspruch 11, **dadurch gekennzeichnet, dass** das Mehrgelenk zur Einstellung einer Sitzhöhe des Fahrzeugsitzes dient.

13. Fahrzeugsitz nach Anspruch 11 oder 12, **dadurch gekennzeichnet, dass** im Crashfall ein mit einer Fahrzeugstruktur verbindbares Gestell (5) und eine Schwinge (8) des Mehrgelenks (4) miteinander verriegeln.

14. Fahrzeugsitz nach einem der Ansprüche 11 bis 13, wobei das Mehrgelenk (4) durch wenigstens fünf Getriebeglieder (5, 6, 7, 8, 9) definiert ist, und das Mehrgelenk (4) im Normalbetrieb des Fahrzeugsitzes (101, 201) aufgrund einer zwischen wenigstens zwei Getriebegliedern (7, 8) der wenigstens fünf Getriebeglieder (5, 6, 7, 8, 9) wirksamen Verriegelungseinheit (10) als Viergelenk wirksam ist,
und einer Crashsperreneinheit (121), die im Crashfall wenigstens ein mit einer Fahrzeugstruktur verbindbares Gestell (5) und eine Schwinge (8) als zwei der wenigstens fünf Getriebeglieder (5, 6, 7, 8, 9) derart miteinander verriegelt, dass das Mehrgelenk (4) als Dreigelenk wirkt, wobei zwischen dem Gestell (5) und der Schwinge (8) ein weiteres Getriebeglied (7) der wenigstens fünf Getriebeglieder (5, 6, 7, 8, 9) angeordnet ist, und wobei das Mehrgelenk (4) im Crashfall aufgrund eines lastgesteuerten Entriegelns der Verriegelungseinheit (10) zunächst als Fünfgelenk wirken kann, wodurch ein Verriegeln der Crashsperreneinheit (121) auslösbar ist, wobei die Crashsperreneinheit (121) unabhängig von einem lastgesteuerten Entriegeln der Verriegelungseinheit (10) mittels der elektromechanischen Betätigungseinheit (400, 500, 600) verriegelbar ist.

15. Fahrzeugsitz nach Anspruch 14, **dadurch gekennzeichnet, dass** die Crashsperreneinheit (121) unabhängig von dem lastgesteuerten Entriegeln der Verriegelungseinheit (10) und unabhängig von der elektromechanischen Betätigungseinheit (400, 500, 600) durch eine massenträgheitsgesteuerte Klinke (125) verriegelbar ist.

## Claims

1. Crash-arresting unit (221, 321), in particular for a vehicle seat, having a locking element (125) and an actuating unit (400, 500, 600), wherein the locking element (125) can be brought into form-fitting engagement with a mating element (23) by means of the actuating unit (400, 500, 600), **characterized in that** the actuating unit (400, 500, 600) is an electromechanical actuating unit (400, 500, 600) having a fusible wire (440, 540, 640), wherein destruction of the fusible wire (440, 540, 640) frees a movement of the locking element (125) in the direction of the mating element (23).

2. Crash-arresting unit (221, 321) according to Claim 1, **characterized in that** the locking element is a pawl (125).

3. Crash-arresting unit (221, 321) according to Claim 1 or 2, **characterized in that** the mating element is a toothed segment (23).

4. Crash-arresting unit (221, 321) according to one of Claims 1 to 3, **characterized in that** the fusible wire (440, 540, 640) can be destroyed by a current surge.

5. Crash-arresting unit (221, 321) according to one of Claims 1 to 4, **characterized in that** a spring (430, 530, 630) in a preloaded state is held in the preloaded position by the fusible wire (440, 540, 640).

6. Crash-arresting unit (221, 321) according to Claim 5, **characterized in that** the spring is a compression spring (430, 530, 630).

7. Crash-arresting unit (221, 321) according to Claim 6, **characterized in that** the fusible wire (440, 540, 640) and the spring (430, 530, 630) are constituent parts of the electromechanical actuating unit (400, 500, 600).

8. Crash-arresting unit (221) according to one of Claims 5 to 7, **characterized in that** the spring (430) actuates an actuating rod (420), and the actuating rod (420) acts on the locking element (125) in such a way that the locking element (125) comes into engagement with the mating element (23) as soon as the fusible wire (440) is destroyed.

9. Crash-arresting unit (221) according to one of Claims 5 to 7, **characterized in that** the spring (630) actuates an actuating cable (620) as soon as the fusible wire (640) is destroyed, and thereby the actuating cable (620) acts on the locking element (125) in such a way that the locking element (125) comes into engagement with the mating element (23).

10. Crash-arresting unit (321) according to one of Claims 5 to 7, **characterized in that** the spring (530) directly pivots the locking element (125) in such a way that the locking element (125) comes into engagement with the mating element (23) as soon as the fusible wire (540) is destroyed.

11. Vehicle seat, in particular motor vehicle seat, having at least one multi-bar linkage (4) and a crash-arresting unit (221, 321) according to one of Claims 1 to 10 which, in the event of a crash, locks at least two transmission links of the multi-bar linkage (4) with one another.

12. Vehicle seat according to Claim 11, **characterized in that** the multi-bar linkage serves to adjust a seat height of the vehicle seat.

13. Vehicle seat according to Claim 11 or 12, **characterized in that**, in the event of a crash, a frame (5), which can be connected to a vehicle structure, and a rocker (8) of the multi-bar linkage (4) lock with one another.

14. Vehicle seat according to one of Claims 11 to 13, wherein the multi-bar linkage (4) is defined by at least five transmission links (5, 6, 7, 8, 9), and, in normal operation of the vehicle seat (101, 201), the multi-bar linkage (4) is operative as a four-bar linkage on account of a locking unit (10) which acts between at least two transmission links (7, 8) of the at least five transmission links (5, 6, 7, 8, 9),
and a crash-arresting unit (121) which, in the event of a crash, locks at least one frame (5), which can be connected to a vehicle structure, and a rocker (8) as two of the at least five transmission links (5, 6, 7, 8, 9) with one another in such a way that the multi-bar linkage (4) acts as a three-bar linkage, wherein a further transmission link (7) of the at least five transmission links (5, 6, 7, 8, 9) is arranged between the frame (5) and the rocker (8), and wherein, in the event of a crash, the multi-bar linkage (4) can initially act as a five-bar linkage on account of a load-controlled unlocking of the locking unit (10), with the result that locking of the crash-arresting unit (121) can be triggered, wherein the crash-arresting unit (121) can be locked by means of the electromechanical actuating unit (400, 500, 600) independently of a load-controlled unlocking of the locking unit (10) .

15. Vehicle seat according to Claim 14, **characterized in that** the crash-arresting unit (121) can be locked by an inertia-controlled pawl (125) independently of the load-controlled unlocking of the locking unit (10) and independently of the electromechanical actuating unit (400, 500, 600).

## Revendications

1. Unité (221, 321) de blocage en cas d'accident, en particulier pour un siège de véhicule, l'unité présentant un élément de verrouillage (125) et une unité d'actionnement (400, 500, 600), l'élément de verrouillage (125) pouvant être engagé au moyen de l'unité d'actionnement (400, 500, 600) en correspondance géométrique avec un élément complémentaire (23), **caractérisée en ce que**
l'unité d'actionnement (400, 500, 600) est une unité électromécanique d'actionnement (400, 500, 600) dotée d'un fil fusible (440, 540, 640), la destruction du fil fusible (440, 540, 640) libérant un déplacement de l'élément de verrouillage (125) en direction de l'élément complémentaire (23).

2. Unité (221, 321) de blocage en cas d'accident selon la revendication 1, **caractérisée en ce que** l'élément de verrouillage est un cliquet (125).

3. Unité (221, 321) de blocage en cas d'accident selon les revendications 1 ou 2, **caractérisée en ce que** l'élément complémentaire est un segment denté (23).

4. Unité (221, 321) de blocage en cas d'accident selon l'une des revendications 1 à 3, **caractérisée en ce que** le fil fusible (440, 540, 640) peut être détruit par un à-coup de courant.

5. Unité (221, 321) de blocage en cas d'accident selon l'une des revendications 1 à 4, **caractérisée en ce qu'**un ressort (430, 530, 630) à l'état précontraint est maintenu en position précontrainte par le fil fusible (440, 540, 640).

6. Unité (221, 321) de blocage en cas d'accident selon la revendication 5, **caractérisée en ce que** le ressort est un ressort de compression (430, 530, 630).

7. Unité (221, 321) de blocage en cas d'accident selon la revendication 6, **caractérisée en ce que** le fil fusible (440, 540, 640) et le ressort (430, 530, 630) font partie de l'unité électromécanique d'actionnement (400, 500, 600) .

8. Unité (221) de blocage en cas d'accident selon l'une des revendications 5 à 7, **caractérisée en ce que** le ressort (430) actionne une tringle d'actionnement (420), la tringle d'actionnement (420) agissant sur l'élément de verrouillage (125) de telle sorte que l'élément de verrouillage (125) vienne engager l'élément complémentaire (23) dès que le fil fusible (440) a été détruit.

9. Unité (221) de blocage en cas d'accident selon l'une des revendications 5 à 7, **caractérisée en ce que** le ressort (630) actionne un câble d'actionnement (620) dès que le fil fusible (640) a été détruit et qu'ainsi le câble d'actionnement (620) agisse sur l'élément de verrouillage (125) de telle sorte que l'élément de verrouillage (125) vienne engager l'élément complémentaire (23).

10. Unité (321) de blocage en cas d'accident selon l'une des revendications 5 à 7, **caractérisée en ce que** le ressort (530) dévie directement l'élément de verrouillage (125) de telle sorte que l'élément de verrouillage (125) vient engager l'élément complémentaire (23) dès que le fil fusible (540) a été détruit.

11. Siège de véhicule, en particulier siège de véhicule automobile, présentant au moins un cadre articulé (4) et une unité (221, 321) de blocage en cas d'accident selon l'une des revendications 1 à 10, qui en cas d'accident verrouille mutuellement au moins deux bras du cadre articulé (4).

12. Siège de véhicule selon la revendication 11, **caractérisée en ce que** le cadre articulé sert à régler la hauteur d'assise du siège de véhicule.

13. Siège de véhicule selon les revendications 11 ou 12, **caractérisée en ce que** en cas d'accident, un bâti (5) qui peut être relié à la structure du véhicule et un bras oscillant (8) du cadre articulé (4) se verrouillent mutuellement.

14. Siège de véhicule selon l'une des revendications 11 à 13, dans lequel le cadre articulé (4) est défini par au moins cinq bras (5, 6, 7, 8, 9) et lorsque le siège de véhicule (101, 201) est en fonctionnement normal, le cadre articulé (4) agit comme quadrilatère articulé grâce à une unité de verrouillage (10) agissant entre au moins deux bras (7, 8) des cinq bras (5, 6, 7, 8, 9) ou plus,
et une unité (121) de blocage en cas d'accident qui verrouille mutuellement au moins un bâti (5) qui peut être relié à la structure du véhicule et un bras oscillant (8) en tant que deux des cinq bras (5, 6, 7, 8, 9) ou plus de telle sorte que le cadre articulé (4) agit comme triangle articulé, un autre bras (7) des cinq bras (5, 6, 7, 8, 9) ou plus étant disposé entre le bâti (5) et le bras oscillant (8), le cadre articulé (4) pouvant en cas d'accident agir d'abord comme cadre articulé à cinq bras suite au déverrouillage de l'unité de verrouillage (10) sous l'effet de la charge, ce qui permet de déclencher un verrouillage de l'unité (121) de blocage en cas d'accident, l'unité (121) de blocage en cas d'accident pouvant être verrouillée au moyen de l'unité électromécanique d'actionnement (400, 500, 600) indépendamment d'un déverrouillage de l'unité de verrouillage (10) sous l'effet de la charge.

15. Siège de véhicule selon la revendication 14, **caractérisée en ce que** l'unité (121) de blocage en cas d'accident peut être verrouillée par un cliquet (125) agissant sous l'action des forces d'inertie, indépendamment d'un déverrouillage de l'unité de verrouillage (10) sous l'effet de la charge et indépendamment de l'unité électromécanique d'actionnement (400, 500, 600)
